# EUROPEAN PATENT APPLICATION

(11) **EP 4 307 197 A1**
(43) Date of publication of application: **17.01.2024**
(21) Application number: 23185036.3
(22) Date of filing: 12.07.2023
(51) Int. Cl.: G06Q 20/20, G06Q 20/40, G07F 9/00, G07G 1/00, G07G 3/00

(54) **VIDEO ANALYSIS-BASED SELF-CHECKOUT APPARATUS FOR PREVENTING PRODUCT LOSS AND ITS CONTROL METHOD**

(30) Priority: 15.07.2022 KR 20220087387
(71) Applicant: Hanwha Vision Co., Ltd., Seongnam-si, Gyeonggi-do 13488 (KR)
(72) Inventor: Jeon, Woong, 13488 Gyeonggi-do (KR); Kim, Eunmin, 13488 Gyeonggi-do (KR); Yoon, Dongsan, 13488 Seongnam-si, Gyeonggi-do (KR)
(74) Representative: Gulde & Partner

(57) **Abstract**

The present disclosure relates to a self-checkout apparatus. The self-checkout apparatus comprises: a product recognition table which is provided with a product identification zone and on which a product to be identified is located; a first camera which is arranged so that a photographing direction is toward the product identification zone and which obtains a video of the product in the product identification zone by photographing the product identification zone; a second camera which obtains a video of a surveillance area by photographing the surveillance area including the product recognition table and the inside of a store; and a product identifier which detects an identification code assigned to the product from the video of the product obtained by the first camera and interprets the detected identification code to output an identification result of the product captured by the first camera.

## Description

### CROSS REFERENCE TO RELATED APPLICATION

This application claims priority from and the benefit of Korea Patent Application No. 10-2022-0087387, filed on July 15, 2022, which is hereby incorporated by reference in its entirety for all purposes as if fully set forth herein.

### BACKGROUND

### FIELD

The present disclosure relates to a video analysis-based self-checkout apparatus for preventing product loss and its control method.

### DISCUSSION OF THE BACKGROUND

Currently, in stores such as supermarkets, discount stores, etc. most products that customers will purchase are recognized by barcodes attached to the products. Point of Sales (POS) systems including barcode scanners and computers are widely used for the recognition of these products and are beneficially utilized in the stores as they enable quick and accurate calculation of the prices of the products purchased by the customers. The POS system utilizes a barcode scanner as an input device of a computer to recognize a product from a barcode attached to the product and determine the price of each product.

Meanwhile, even if such a POS system is used, it still requires a clerk to scan the barcode of the product with the barcode scanner, which takes up a significant portion of the resources required for the operation of the store. Therefore, in order to reduce the resources required for the operation of the store, more and more stores are introducing self-checkout devices (also referred to as self-checkout terminals or unmanned payment devices) that allow customers to make payments by directly scanning the products they have purchased with the barcode scanner.

However, there are many situations where the products are lost in the store, such as a situation where some of the customers carry two products and scan only one of them with the barcode scanner to pay using the self-checkout device in the store, a situation where they take the products without scanning them with the barcode scanner, etc.

The above description is only intended to facilitate the understanding of the background art of the technical ideas of the present disclosure, and therefore it cannot be understood as the prior art known to those skilled in the art to which the present disclosure pertains.

### SUMMARY

The present disclosure is intended to solve the above-mentioned problems, and an object of the present disclosure is to prevent product loss by determining an intentional abnormal behavior of a customer based on a video obtained by a self-checkout apparatus installed in a store.

Moreover, another object of the present disclosure is to facilitate the determination of product theft, the exchange and refund of products, as well as the storage and extraction of video evidence related to a customer's abnormal behavior, with reference to an event video, a video related to the customer's payment transaction, and a video related to the customer's behavior occurred in a store, which are taken by a self-checkout apparatus.

The problems to be solved by the present disclosure are not limited to those mentioned above, and other problems not mentioned will be clearly understood by those skilled in the art from the description below.

The present disclosure provides a self-checkout apparatus. The self-checkout apparatus may comprise: a product recognition table which is provided with a product identification zone and on which a product to be identified is located; a first camera which is arranged so that a photographing direction is toward the product identification zone and which obtains a video of the product in the product identification zone by photographing the product identification zone; a second camera which obtains a video of a surveillance area by photographing the surveillance area including the product recognition table and the inside of a store; a product identifier which detects an identification code assigned to the product from the video of the product obtained by the first camera and interprets the detected identification code to output an identification result of the product captured by the first camera; a customer behavior determinator which interprets the video of the surveillance area obtained by the second camera to output a determination result of the customer's behavior captured by the second camera; and a processor which specifies the customer's behavior as an abnormal behavior and a normal behavior based on the identification result of the product captured by the first camera and the determination result of the customer's behavior captured by the second camera, and generates a control signal depending on the specified result.

The self-checkout apparatus and its related technology may include the following features.

According to the present disclosure, the customer behavior determinator may comprise an artificial neural network which analyzes the video of the surveillance area obtained by the second camera to determine the customer's behavior captured by the second camera, and the artificial neural network may be trained by learning a video of the customer's behavior captured by the second camera when the product is identified by the product identifier and a video of the customer's behavior captured by the second camera when the product is not identified by the product identifier to determine the customer's behavior that does not correspond to the behavior of locating a product in the product identification zone to be identified.

According to the present disclosure, the processor may analyze the video of the surveillance area obtained by the second camera to specify the customer's behavior captured by the second camera as an abnormal behavior and a normal behavior based on at least one of a change in facial expression, a change in face color, and a heart rate reading of the customer captured by the second camera, and generate a control signal depending on the specified result.

According to the present disclosure, if a specific product is input, the processor may store a video of the customer's behavior related to the specific product from the video of the customer's behavior captured by the second camera, and train the artificial neural network with a video of the customer's behavior related to the specific product, which is specified as an abnormal behavior, from the stored video of the customer's behavior related to the specific product, to update the artificial neural network's ability to determine the customer's abnormal behavior for the specific product.

According to the present disclosure, if it is determined that the customer has picked up an age-restricted product based on the analysis of the video captured by the second camera, the processor may analyze the face image of the customer who has picked up the age-restricted product to calculate an age of the customer; and if the age of the customer who has picked up the age-restricted product is determined to be below an authorized age for the age-restricted product and the customer who has picked up the age-restricted product is recognized in front of the product recognition table, the processor may specify whether the behavior of the customer who has picked up the age-restricted product is an abnormal behavior based on the identification result of the product captured by the first camera for the age-restricted product and the determination result of the customer's behavior captured by the second camera.

According to the present disclosure, the self-checkout apparatus may further comprise a pre-identification product table and a post-identification product table disposed in a predetermined area around the product recognition table, and the abnormal behavior of the customer may include a situation where the customer behavior determinator recognizes two or more products in the customer's hand, a situation where the customer behavior determinator recognizes one product in the customer's hand, but the recognized product is not identified, and a situation where the product picked up by the customer from the pre-identification product table is not identified and moved to the post-identification product table.

According to the present disclosure, the pre-identification product table and the post-identification product table may comprise a weighing sensor that measures the weight of products placed on the pre-identification product table and the post-identification product table; and if the weighing sensor detects a weight change in at least one of the pre-identification product table and the post-identification product table and the product is not identified by the product identifier at the time of detecting the weight change or if the weighing sensor detects a smaller weight increase in the post-identification product table than the weight decrease in the pre-identification product table and the product is identified by the product identifier at the time of detecting the weight change, the processor may output a specifying result to decide that the customer has committed an abnormal behavior.

According to the present disclosure, the processor may generate metadata for an event related to the customer's behavior based on the identification result of the product captured by the first camera and the determination result of the customer's behavior captured by the second camera, match the metadata with video data of the first camera and the second camera from which the metadata is generated to store the resulting data in a video data storage device, and if a keyword is input, search for the keyword from the metadata to extract and reproduce video data corresponding to the keyword from the video data storage device.

According to the present disclosure, if a product is recognized from the videos captured by the first camera and the second camera, the processor may: store a video of the customer's behavior related to the recognized product in the video data storage device, record information specifying the recognized product in the metadata, and then match the metadata with the video of the customer's behavior related to the recognized product to store the resulting data; and if a keyword specifying the recognized product is input, search for the keyword from the metadata to extract the video of the customer's behavior related to the recognized product from the video data storage device.

According to the present disclosure, the processor may generate a personal identification object corresponding to personal identification information of the customer captured by the second camera, and match the personal identification object with the video data obtained by the first camera related to the customer captured by the second camera and the video data obtained by the second camera to store the resulting data in the video data storage device.

According to the present disclosure, the artificial neural network may determine the customer's behavior by utilizing a skeleton algorithm for the customer in the video of the customer's behavior captured by the second camera.

Meanwhile, the present disclosure provides a control method of a self-checkout apparatus. The method may comprise the steps of: obtaining, by a first camera, a video of a product in a product identification zone by photographing the product identification zone provided on a product recognition table; obtaining, by a second camera, a video of a surveillance area by photographing the surveillance area including the product recognition table and the inside of a store; detecting an identification code assigned to the product from the video of the product obtained by the first camera and interpreting the detected identification code to output an identification result of the product captured by the first camera; interpreting the video of the surveillance area obtained by the second camera to output a determination result of the customer's behavior captured by the second camera; specifying the customer's behavior as either an abnormal behavior or a normal behavior based on the identification result of the product captured by the first camera and the determination result of the customer's behavior captured by the second camera; and then generating a control signal depending on the specifying result.

The control method of the self-checkout apparatus and its technology may include the following features.

According to the present disclosure, the step of specifying the customer's behavior as either an abnormal behavior or a normal behavior may comprise the step of analyzing the video of the surveillance area obtained by the second camera by means of an artificial neural network to determine the customer's behavior captured by the second camera, and the artificial neural network may be trained by learning a video of the customer's behavior captured by the second camera at the time when the product is identified and a video of the customer's behavior captured by the second camera at the time when the product is not identified to determine the customer's behavior that does not correspond to the behavior of locating a product in the product identification zone to be identified.

According to the present disclosure, the control method of the self-checkout apparatus may comprise the step of analyzing the video of the surveillance area obtained by the second camera to output a determination result of the customer's behavior captured by the second camera based on at least one of a change in facial expression, a change in face color, and a heart rate reading of the customer captured by the second camera.

According to the present disclosure, the control method of the self-checkout apparatus may further comprise the steps of: if a specific product is input, storing a video of the customer's behavior related to the specific product from the video of the customer's behavior captured by the second camera; and training the artificial neural network with a video of the customer's behavior related to the specific product, which is specified as an abnormal behavior from the stored video, to update the artificial neural network's ability to determine the customer's abnormal behavior for the specific product.

According to the present disclosure, the control method of the self-checkout apparatus may further comprise the steps of: if it is determined that the customer has picked up an age-restricted product based on the analysis of the video captured by the second camera, analyzing the face image of the customer who has picked up the age-restricted product to calculate an age of the customer; and if the age of the customer who has picked up the age-restricted product is determined to be below the authorized age for the age-restricted product and the customer who has picked up the age-restricted product is recognized in front of the product recognition table, specifying whether the behavior of the customer who has picked up the age-restricted product is an abnormal behavior based on the identification result of the product captured by the first camera for the age-restricted product and the determination result of the customer's behavior captured by the second camera.

According to the present disclosure, the surveillance area may comprise a pre-identification product table and a post-identification product table disposed in a predetermined area around the product recognition table, and the abnormal behavior may include a situation where two or more products in the customer's hand are recognized, a situation where one product in the customer's hand is recognized, but the recognized product is not identified, and a situation where the product picked up by the customer from the pre-identification product table is not identified and moved to the post-identification product table.

According to the present disclosure, the control method of the self-checkout apparatus further comprise the step of: measuring the weight of products placed on the pre-identification product table and the post-identification product table; and the step of specifying the customer's behavior as either an abnormal behavior or a normal behavior may further comprise the step of: if a weight change is detected in at least one of the pre-identification product table and the post-identification product table and the product is not identified at the time of detecting the weight change, or if a smaller weight increase is detected in the post-identification product table than the weight decrease in the pre-identification product table and the product is identified at the time of detecting the weight change, specifying that the customer has committed an abnormal behavior.

According to the present disclosure, the control method of the self-checkout apparatus may further comprise the steps of: generating metadata for an event related to the customer's behavior based on the identification result of the product captured by the first camera and the determination result of the customer's behavior captured by the second camera; matching the metadata with video data of the first camera and the second camera from which the metadata is generated to store the resulting data in a video data storage device; and if a keyword is input, searching for the keyword from the metadata to extract and reproduce video data corresponding to the keyword from the video data storage device.

According to the present disclosure, the control method of the self-checkout apparatus may further comprise the steps of: if a product is recognized from the videos captured by the first camera and the second camera, storing a video of the customer's behavior related to the recognized product in the video data storage device, recording information specifying the recognized product in the metadata, and then matching the metadata with the video of the customer's behavior related to the recognized product to store the resulting data; and if a keyword specifying the recognized product is input, searching for the keyword from the metadata to extract the video of the customer's behavior related to the recognized product from the video data storage device.

According to the present disclosure, it is possible to prevent product loss by determining an intentional abnormal behavior of a customer based on a video obtained by a self-checkout apparatus installed in a store.

Moreover, according to the present disclosure, it is possible to facilitate the determination of product theft, the exchange and refund of products, as well as the storage and extraction of video evidence related to a customer's abnormal behavior, with reference to an event video, a video related to the customer's payment transaction, and a video related to the customer's behavior occurred in a store, which are taken by the self-checkout apparatus.

In addition, according to the present disclosure, it is possible to determine the customer's age and psychological state based on a video obtained by the self-checkout apparatus installed in the store and determine an abnormal behavior that may occur based on the determined age and psychological state of the customer.

Meanwhile, the effects of the present disclosure are not limited to those mentioned above, and other effects not mentioned will be clearly understood by those skilled in the art from the description below.

### BRIEF DESCRIPTION OF THE DRAWINGS

The following drawings attached to this disclosure are provided to illustrate the present disclosure and serve to further understand the technical idea of the present disclosure together with specific details for carrying out the present disclosure, and thus the present disclosure should not be interpreted as being limited only to the matters described in the drawings.
FIG. 1 is an external view of an exemplary self-checkout apparatus according to the present disclosure.
FIG. 2 is a diagram illustrating a video of a surveillance area obtained from a surveillance camera according to the present disclosure.
FIG. 3 is a block diagram illustrating the configuration of a self-checkout apparatus according to the present disclosure.
FIG. 4 is a functional block diagram of a controller according to the present disclosure.
FIG. 5 is a flowchart illustrating a control method of a self-checkout apparatus according to the present disclosure.

### DETAILED DESCRIPTION

The technology disclosed herein can be applied to a video analysis-based self-checkout apparatus and a control method thereof for preventing product loss. However, the technology disclosed herein is not limited thereto and may be applied to all devices and methods to which the technical spirit of the technology may be applied.

It should be noted that the technical terms used herein are used only to describe specific examples and are not intended to limit the technical spirit of the present disclosure. Moreover, unless specifically defined otherwise herein, the technical terms used herein should be interpreted as having the same meanings as those generally understood by those of ordinary skill in the field to which the present disclosure pertains, and should not be construed in an excessively comprehensive meaning or in an excessively restricted meaning. Moreover, if the technical terms used herein are incorrect technical terms that do not accurately represent the technical spirit of the present disclosure, they should be replaced with technical terms that can be understood correctly by those skilled in the art. In addition, the general terms used herein should be interpreted according to their definitions as defined in the dictionary or according to the context, and should not be construed in an excessively restricted meaning.

Terms including ordinal numbers such as first, second, etc. may be used to describe various components, but these components should not be limited by the terms. These terms are used only to distinguish a specific component from other components. For example, without departing from the scope of the present disclosure, a first component could be termed a second component, and similarly, the second component could also be termed the first component.

Hereinafter, the examples disclosed herein will be described in detail with reference to the accompanying drawings, wherein like reference numerals refer to the same or corresponding components throughout the drawings, and a redundant description thereof will be omitted.

Moreover, in the following description of the technology disclosed herein, if it is determined that a detailed description of the related art may obscure the gist of the technology disclosed herein, the detailed description thereof will be omitted. In addition, it should be noted that the accompanying drawings are only intended to facilitate understanding of the spirit of the technology disclosed herein, and should not be construed as limiting the spirit of the technology by the accompanying drawings.

Videos or images according to the present disclosure include both still images and moving images, unless otherwise specified.

Hereinafter, examples will be described in detail with reference to the accompanying drawings.

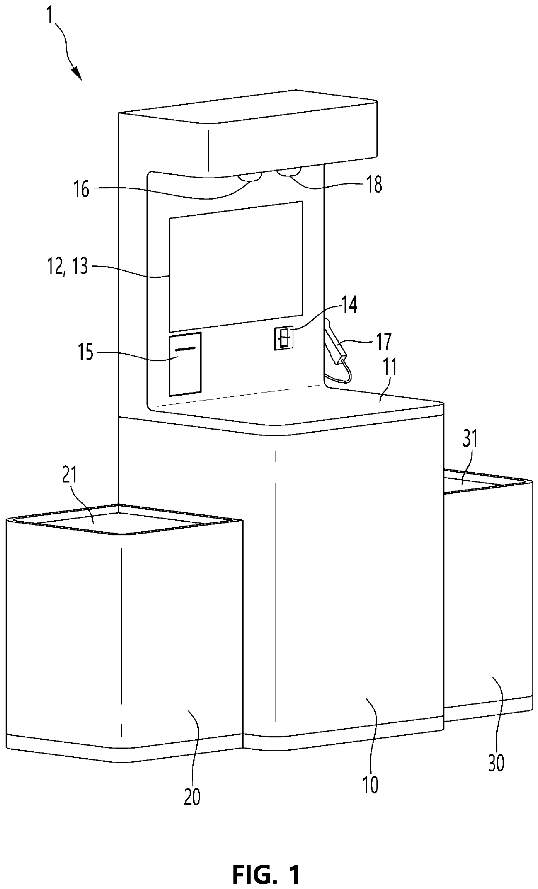

FIG. 1 is an external view of an exemplary self-checkout apparatus according to the present disclosure.

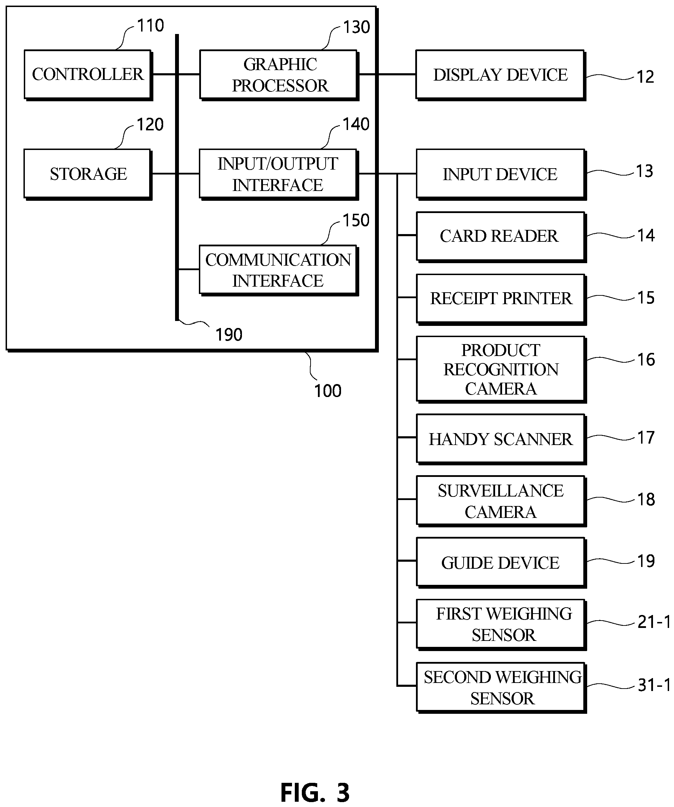

Referring to FIG. 1, a self-checkout apparatus 1 according to the present disclosure may have first housing 10, second housing 20, and third housing 30. The first housing 10, second housing 20, and third housing 30 may accommodate a control device (not shown, 100 in FIG. 3) that generally controls the self-checkout apparatus 1, a communication interface (not shown) that performs data communication with an external electronic device, a power supply (not shown) that supplies drive power to the self-checkout apparatus 1, etc.

The first housing 10 may be provided with a product recognition table 11, a display device 12, an input device 13, a card reader 14, a receipt printer 15, a product recognition camera 16, a handy scanner 17, and a surveillance camera 18.

The second housing 20 may be provided with a pre-identification product table 21 on its top and a weighing sensor (not shown) therein which can measure the weight of an object placed on the pre-identification product table 21.

The third housing 30 may be provided with a post-identification product table 31 on its top and a weighing sensor (not shown) therein which can measure the weight of an object placed on the post-identification product table 31.

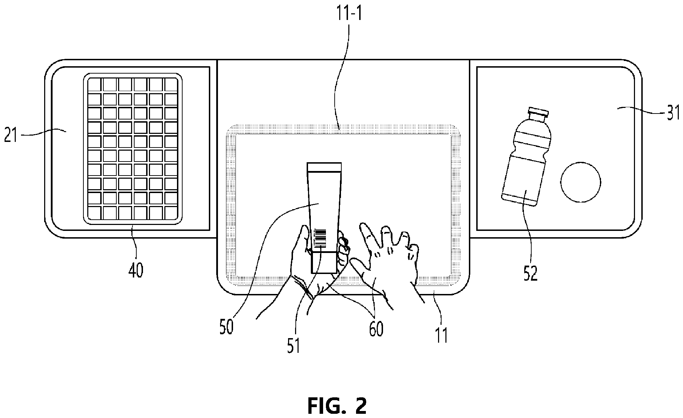

The product recognition table 11 may be provided with a product identification zone (11-1 in FIG. 2), which is defined by a photographing area of the product recognition camera 16. A customer (e.g., a user, shopper) may place a product to be paid in the product identification zone so that an identification code of the product is directed to the photographing area of the product recognition camera 16 to allow the product recognition camera 16 to photograph the identification code of the product to be paid.

The display device 12 may display information related to shopping and payment. The input device 13 may receive commands related to the shopping and payment from the customer. The display device 12 and the input device 13 may be configured as a single module. The display device 12 and the input device 13 may be configured in the form of an LCD module, in which, for example, a touch input sensor (corresponding to the input device 13) and a liquid crystal display (LCD) panel (corresponding to the display device 12) are combined. The display device 12 may display an operation guide screen or operation menu screen, a product scan result screen, a product checkout screen, etc. of the self-checkout apparatus 1. Information involved in the product checkout, such as a video of a product captured by the product recognition camera 16, a name of the product based on the identified identification code, a unit price of the product, a weight of the product, etc. can be displayed on the product scan result screen. A total shopping amount, payment method information, point (reward) information, etc. may be displayed on the product checkout screen. The input device 13 may receive the customer's (e.g., the user's) operation command or menu selection according to the screen display of the display device 12.

The card reader 14 may read information recorded on a magnetic card or IC card (for example, a credit card, check card, or point card).

After the payment for the product is made, the receipt printer 15 may print and output a receipt which contains information such as the name of the purchased product, the unit price of the product, the total shopping amount, etc.

The product recognition camera 16 may be fixed to the top of the first housing 10 so that its photographing direction is toward the product identification zone (11-1 in FIG. 2) provided on the upper surface of the product recognition table 11, and obtain a video of the product located in the product identification zone by photographing the product identification zone. In this example, the product recognition camera 16 is fixed to the top of the first housing 10, but the fixed position of the product recognition camera 16 is not limited to the top of the first housing 10, and it may be installed on the front side of the first housing 10, where the receipt printer 15 is installed, or in the inside of the product recognition table 11 so that the angle of view of the product recognition camera 16 is toward the product identification zone. The upper surface of the product recognition table 11, that is, the product identification zone may be formed of a transparent material, and the product recognition camera 16 may obtain a video of the product which is incident through the product identification zone of the transparent material. The product recognition camera 16 can be installed not only in a single location, but also simultaneously in two or more locations, such as the top of the first housing 10, the front side of the first housing 10, the inside of the product recognition table 11, etc.

Since the product recognition camera 16 obtains a video of an identification code (e.g., a barcode) printed on the surface of the product to allow the self-checkout apparatus 1 to identify the product, and thus can be called a barcode reader or barcode scanner. In the present disclosure, an example of the identification code labeled on a product is a one-dimensional barcode, but it may be a two-dimensional barcode such as a QR code. Moreover, the self-checkout apparatus 1 can not only recognize the product through the identification code, but also directly recognize the product through the video analysis of the product photographed by the product recognition camera 16.

The handy scanner 17 may be a handy barcode reader or barcode scanner that is used as an auxiliary device to recognize a product when the barcode of the product is not recognized even though the customer places the product in the product identification zone.

The surveillance camera 18 may obtain a video of the surveillance area by photographing the surveillance area including the product recognition table 11 and a predetermined area around it. The predetermined area around the product recognition table 11 may include areas where the pre-identification product table 21 and the post-identification product table 31 are located on the left and right sides of the product recognition table 11. Moreover, the predetermined area around the product recognition table 11 may include a predetermined area where a customer in front of the product recognition table 11 stands while making a payment. In FIG. 1, the surveillance camera 18 is installed at the top of the first housing 10 so that the photographing direction is toward the surveillance area, but the installation place is not limited to the top of the first housing 10, and the surveillance camera 18 may be installed in other places than the first housing 10, second housing 20, and third housing 30 so that the surveillance area includes the product recognition table 11 and a predetermined area around it. The predetermined area around the product recognition table 11 may include a display shelf in the store where the self-checkout apparatus 1 is provided and an aisle in the store, and the surveillance camera 18 may obtain a video of the display shelf in the store and the aisle for the purpose of surveillance. In the example of FIG. 1, the surveillance camera 18 is shown as being installed at the top of the first housing 10, but may be installed on the ceiling in the store or on a wall or pillar in the store, and the installation location is not limited to the housing of the self-checkout apparatus 1. Moreover, a plurality of surveillance cameras 18 may be installed in a plurality of places, such as the top of the first housing 10 of the self-checkout apparatus 1, the ceiling in the store, the wall in the store, etc.

The surveillance camera 18 may photograph the product recognition table 11 and the inside of the store to obtain a moving image including the customer's behavior related to a product. For example, the surveillance camera 18 may photograph the customer's behavior of scanning a product with the product recognition camera 16 on the product recognition table 11, the customer's behavior of making a payment for the product purchase by means of a payment method, etc. In addition, the surveillance camera 18 may photograph the display shelf and the aisle in the store to obtain a video of the customer's behavior related to a product, such as when the customer picks up the product, when the customer puts the product in a shopping basket or shopping cart, when the customer moves the product, etc. Furthermore, the surveillance camera 18 may also photograph the face of a customer standing in front of the product recognition table 11, the display shelf, or the aisle in the store. Additionally, the surveillance camera 18 may obtain a video of a product held in the customer's hand or contained in the customer's shopping basket or shopping cart. These videos are stored along with metadata, such as flags or tags, which describe the content of each video itself and include information about the photographing time, in an internal storage of the self-checkout apparatus 1 or an external storage the self-checkout apparatus 1, which will be described later, so that the user can quickly search for all videos including specified keywords by using the information recorded in the metadata as the keywords at any time.

FIG. 2 is a diagram illustrating an example of a video of the surveillance area obtained from the surveillance camera 18.

FIG. 2 shows an example of an area captured by the surveillance camera 18 installed at the top of the first housing 10 of the self-checkout apparatus 1 of FIG. 1, and referring to FIG. 2, a shopping basket 40 is placed on the pre-identification product table 21. In the product identification zone 11-1 of the product recognition table 11, a first product 50 is located by the customer's hand 60 so that its identification code 51 is directed to the product recognition camera 16. Second products 52 for which the identification is completed are placed on the post-identification product table 31. In general, the customer is instructed to place the products to be identified for payment on the pre-identification product table 21 while keeping them in the shopping basket 40, and then the customer picks up the products from the shopping basket 40 one by one to locate them in the product identification zone 11-1 for the product identification for a while (for example, until a screen on the display device 12 indicates that the product identification has been completed, or until a specific color light is emitted from an LED light provided along the border of the product identification zone 11-1. The products 32 for which the identification is completed are placed on the post-identification product table 31.

Referring back to FIG. 1, the pre-identification product table 21 is a table on which the products before being recognized by the product recognition camera 16 are temporarily placed, and the products may be placed on this table while they are still in the shopping basket or the products may be placed directly on this table without being contained in the shopping basket. The weighing sensor provided in the pre-identification product table 21 may detect a decrease in weight of the pre-identification product table 21 when a customer picks up a product placed on the pre-identification product table 21.

The post-identification product table 31 is a table on which the products after being recognized by the product recognition camera 16 are placed. The weighing sensor provided in the post-identification product table 31 may detect an increase in weight of the post-identification product table 31 when the customer identifies the product by means of the product recognition camera 16 ad then puts down the product on the post-identification product table 31.

Since the illustrated components are not essential, a self-checkout apparatus 1 having more or fewer components may be implemented. These components may be implemented in hardware or software, or in a combination of hardware and software.

FIG. 3 is a block diagram illustrating the configuration of the self-checkout apparatus according to the present disclosure.

Referring to FIG. 3, the self-checkout apparatus 1 may comprise a control device 100 and several peripheral devices connected to the control device 100.

The control device 100 includes a controller 110, a storage 120, a graphic processor 130, an input/output interface 140, and a communication interface 150.

The controller 110 may comprise a central processor (CPU) that generally controls the self-checkout apparatus 1. The controller 110 reads a control program stored in the storage 120 and executes the control program to recognize products and perform a payment process for the recognized products.

The storage 120 includes a volatile storage (not shown) and a non-volatile storage (not shown). The volatile storage, such as a random access memory (RAM), temporarily stores an operating system (OS) program or application programs for execution by the controller 110 or video data. The non-volatile storage, such as a solid state drive (SSD), hard disk drive (HDD), or flash memory, stores an application program executed by the controller 110 or data used for execution of the application program executed in a non-volatile manner. Moreover, the non-volatile storage can also store video data obtained from the product recognition camera 16 and the surveillance camera 18.

The graphic processor 130 generates the operation guide screen or operation menu screen, the product scan result screen, the product checkout screen, etc. according to the command from the controller 110 and then converts them into video signals to output them to the display device 12. In addition, the graphic processor 130 may performs video processing for recognizing the identification code of the product in the product video obtained by the product recognition camera 16 and video processing for determining the customer's behavior in the video of the surveillance area obtained from the surveillance camera 18.

The input/output interface 140 controls the peripheral devices such as the input device 13 connected thereto. Furthermore, the input/output interface 140 may transmit data to an external storage medium (not shown) for data storage and may read data from the external storage medium.

The communication interface 150 transmits and receives data to and from the outside through a network, and the network disclosed herein may include, but not limited to, a wireless network, a wired network, a public network such as the Internet, a private network, a Global System for Mobile communication network (GSM), a General Packet Radio Network (GPRN), a Local Area Network (LAN), a Wide Area Network (WAN), a Metropolitan Area Network (MAN), a cellular network, a Public Switched Telephone Network (PSTN), a Personal Area Network, Bluetooth, Wi-Fi Direct, a Near Field communication, an Ultra-Wide band, a combination thereof, or any other network.

To the controller 110, the storage 120, the graphic processor 130, the input/output interface 140, the communication interface 150, etc. are connected through a system bus 190.

To the input/output interface 140, the input device 13, the card reader 14, the receipt printer 15, the product recognition camera 16, the handy scanner 17, surveillance camera 18, a first weighing sensor 21-1 in the pre-identification product table 21 and a second weighing sensor 31-1 in the post-identification product table 31, as well as a guide device 19 are connected. The data obtained from the devices or sensors are transmitted to the controller 110 through the input/output interface 140, and the controller 110 processes the data to transfer the processed data to a required place or use the processed data directly to execute control commands.

The guide device 19 may output necessary sounds or lights in a series of processes from product recognition to payment. For example, the guide device 19 may output a guide voice to explain smooth product recognition, as directed by control signals from the control device 100 or may output a warning sound or warning light in the event of any irregularities, such as unidentified products. Furthermore, the guide device 19 may output an alarm sound when the identification of products is successively completed, as directed by control signals from the control device 100.

Meanwhile, the self-checkout apparatus 1 according to an example may store all videos obtained from the product recognition camera 16 and the surveillance camera 18 in the storage 120 such as a Digital Video Recorder (DVR), or a Network Video Recorder (NVR) or cloud storage that is externally provided through the communication interface 150. In particular, among the videos obtained by the surveillance camera 18, a video determined to have an event may be stored along with matching metadata describing the content of the event. Moreover, as described above with reference to FIG. 1, among the videos obtained by the surveillance camera 18, the video including the customer's behavior related to the product and the video of the product can be stored along with matching metadata describing the content of the corresponding video and the information about the photographing time. Subsequently, the user may searches for the metadata from the stored video data to extract or reproduce the video where an event that the user wants to check occurred, the video of the customer's behavior related to the product that the user wants to check, and the video of the product that the user wants to check, and store the corresponding video as a separate video file. Information included in the metadata that can be used as keywords may include a product name, barcode information, receipt information, etc.

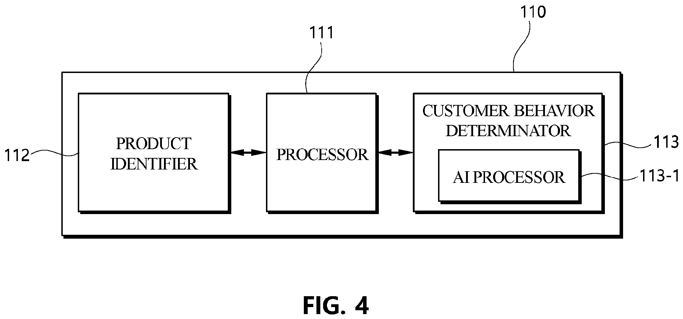

FIG. 4 is a functional block diagram of the controller 110 according to the present disclosure.

Referring to FIGS. 1 to 4, the controller 110 may comprise a processor 111, a product identifier 112, and a customer behavior determinator 113. The controller 110 may perform the functions of the control device 100, which executes the product payment process and the process of preventing product loss, by reading a control program stored in the storage 120 and executing the control program to control the input device 13, the card reader 14, the receipt printer 15, the product recognition camera 16, the handy scanner 17, the surveillance camera 18, the first weighing sensor 21-1 in the pre-identification product table 21, the second weighing sensor 31-1 in the post-identification product table 31, and the guide device 19, which are connected to the controller 110 through the system bus 190.

The product identifier 112 may detect the identification code 51 assigned to the product from the video of the product obtained by the product recognition camera 16, interpret the detected identification code to identify the product captured by the product recognition camera 16, and output the result. When a customer places a product to be recognized in the product identification zone 11-1, the product recognition camera 16 automatically adjusts the exposure level and the focus to obtain a video of the product including the control device placed in the product identification zone 11-1. The product recognition camera 16 has a lens, a focusing device, an exposure control device, and an imaging device such as a CMOS, and outputs video data of the captured product. In the example of FIG. 1, the product recognition camera 16 is installed so that the photographing direction is downward to photograph the product placed in the product identification zone 11-1 from above, but as described above, the fixed position of the product recognition camera 16 is not limited to the top of the first housing 10, and it may be installed in any location, which enables to photograph the product itself or the identification code attached to the product, such as the front side of the first housing 10, the inside of the product recognition table 11, etc.

The product identifier 112 may interpret the video data obtained from the product recognition camera 16 to detect the presence of any products within the video. The product identifier 112 detects whether there is an identification code of the product within the obtained product video. Specifically, the product identifier 112 divides the video data into predetermined regions and detects whether there is a pattern corresponding to the identification code in each region. If the identification code is detected in the product video, the product identifier 112 interprets the detected identification code to specify the captured product.

The customer behavior determinator 113 may utilize a video segmentation technology to recognize the presence of any products or determine the number of products and the types of products from videos obtained by the surveillance camera 18 for the product recognition table 11, the pre-identification product table 21 and the post-identification product table 31 within the surveillance area and from videos obtained by photographing the customers' hands.

The customer behavior determinator 113 may interpret the video of the surveillance area obtained by the surveillance camera 18 to determine the customer's behavior captured by the surveillance camera 18.

The customer behavior determinator 113 may comprise an AIprocessor 113-1 that determines the customer's behavior through artificial intelligence-based video analysis.

The AI processor 113-1 includes an artificial neural network which analyzes the video of the surveillance area obtained by the surveillance camera 18 and determines the behavior of the customer captured by the surveillance camera 18. The artificial neural network is trained by learning the video of the customer's behavior captured by the surveillance camera 18 at the time when the product is identified by the product identifier 112 and the video of the customer's behavior captured by the surveillance camera 18 at the time when the product is not identified by the product identifier 112 to determine the customer's abnormal behavior that does not correspond to the behavior of locating the first product 50 in the product identification zone to be identified.

The artificial neural network may determine the customer's behavior by utilizing a skeleton algorithm with respect to the actions performed by the customer in front of the self-checkout apparatus 1 to identify the product, from the video of the customer's behavior captured by the surveillance camera 18. The customer's behavior that can be identified via the skeleton algorithm may include the behavior of picking up a product from the pre-identification product table 21, the behavior of bringing the product to the product identification zone 11-1 to scan the product held in the hand, the behavior of repeatedly bringing the product to the product identification zone 11-1 because the product is not scanned, the behavior of changing the direction of the product so that the product's identification code is directed to the product recognition camera 16, etc.

Examples of the customer's abnormal behavior may include: (a) a situation where two or more products picked up by the customer at once from the pre-identification product table 21 are recognized in the customer's hands; (b) a situation where the product picked up by the customer is recognized, but is not identified in the product identifier 112; (c) a situation where the product picked up by the customer from the pre-identification product table 21 is not identified in the product identifier 112, but is moved to the post-identification product table 31; and (d) a situation where changes in weight of the pre-identification product table 21 and the post-identification product table 31 are detected in a state where there is no action to scan the product, that is, in a state where the product is not identified.

The customer's abnormal behavior is not limited to the above examples, and various examples may be further added.

Accordingly, the customer behavior determinator 113 may interpret the video of the surveillance area obtained by the surveillance camera 18 to analyze the customer's behavior captured by the surveillance camera 18 and, based on the analysis result, determine the customer's abnormal behavior by means of the artificial neural network.

The processor 111 may specify the customer's behavior captured by the surveillance camera 18 as either an abnormal behavior or a normal behavior based on the identification result of the product captured by the product recognition camera 16 and the determination result of the customer's behavior captured by the surveillance camera 18.

Meanwhile, the processor 111 may receive in real time a result of detecting a change in weight of at least one of the pre-identification product table 21 and the post-identification product table 31 from the first weighing sensor 21-1 provided in the pre-identification product table 21 and the second weighing sensor 31-1 provided in the post-identification product table 31 and a product identification result from the product identifier 112, and if the product is not identified in the product identifier 112 at the time when the change in weight is detected, output a specified result to decide that the customer captured by the surveillance camera 18 has committed an abnormal behavior. Moreover, the processor 111 may receive in real time a result of detecting a smaller weight increase in the post-identification product table than the weight decrease in the pre-identification product table from the weighing sensors 21-1 and 31-1 and a product identification result from the product identifier 112, and even if the product is identified in the product identifier 112 at the time when the change in weight is detected, output a specified result to decide that the customer captured by the surveillance camera 18 has committed an abnormal behavior.

When determining the customer's abnormal behavior based on the changes in weight of the pre-identification product table 21 and the post-identification product table 31, the processor 111 may refer to the determination result of the customer's behavior by the customer behavior determinator 113. For example, when a customer picks up a product from the pre-identification product table 21, the first weighing sensor 21-1 of the pre-identification product table 21 may detect a decrease in weight. However, if an increase in weight is detected by the second weighing sensor 31-1 of the post-identification product table 31 even if the customer has not placed any products in the product identification zone 11-1 within a certain period of time, the customer behavior determinator 113 determines that the customer intentionally has not scanned the identification code of the product to decide that the customer has committed an abnormal behavior. As another example, in a situation where, as a customer picks up a product from the pre-identification product table 21, the first weighing sensor 21-1 of the pre-identification product table 21 detects a decrease in weight, and the product identifier 112 identifies one product, but the second weighing sensor 31-1 of the post-identification product table 31 detects a much smaller increase in weight than the weight decrease in the pre-identification product table 21, the processor 111 determines that the customer has scanned the identification code of only one of the two products picked up by the customer and has not scanned the identification code of the other products to decide that the customer has committed an abnormal behavior.

The processor 111 specifies the customer's behavior as an abnormal behavior and a normal behavior based on the identification result of the product captured by the product recognition camera 16 from the product identifier 112 and the determination result of the customer's behavior captured by the surveillance camera 18 from the customer behavior determinator 113 and generates a control signal depending on the specified result. For example, if it is determined that the customer has committed a fraudulent behavior as a result of specifying the customer's behavior, the processor 111 may control the guide device 19 to generate a warning sound or a warning to inform the customer's fraudulent behavior. For another example, if it is determined that the customer has committed a fraudulent behavior as a result of specifying the customer's behavior, the processor 111 may control the guide device 19 to notify the customer's fraudulent behavior to a separate manager terminal.

Meanwhile, the processor 111 may generate metadata for an event related to the customer's behavior captured by the surveillance camera 18 based on the identification result of the product captured by the product recognition camera 16 and the determination result of the customer's behavior captured by the surveillance camera 18, match the metadata with video data of the product recognition camera 16 and the surveillance camera 18 from which the metadata is generated, and store the resulting data in a video data storage device (e.g., the above-mentioned storage 120 or external NVR or cloud storage). Here, the metadata may include information that indicates the type of an event, describes the content of the event, or enables to identify the event. Moreover, the metadata may include information that indicates the type of customer's behavior in the video, describes the content of the customer's behavior in the video, or enables to identify the customer's behavior in the video. In addition, the metadata may further include identification code information of a specific product, video recognition information for a specific product, and unique personal identification information of a customer captured by the surveillance camera 18.

For example, if the following conditions (i) to (vi) occur, the processor 111 generates metadata, and then combines the generated metadata with video data having the conditions occurred to store the resulting data in a video data storage device:
(i) if a product is recognized and identification code information is normally obtained;
(ii) if the product is recognized, but the identification code information is not obtained;
(iii) if a product whose identification code has not been recognized is re-scanned with the handy scanner 17;
(iv) if an emergency button or manager call button is pressed;
(v) if a customer starts to use the self-checkout apparatus (1); and
(vi) if the customer has completed the product scanning and proceeds to the payment stage.

The processor 111 may extract personal identification information from the video of the customer captured by the surveillance camera 18, generate a personal identification object corresponding to the personal identification information, and then match the generated personal identification object with video data related to the customer captured by the surveillance camera 18, i.e., identification code information of the product recognized by the customer through the product recognition camera 16 and video data photographing the customer's behavior related to the product scanning obtained by the surveillance camera 18 to store the resulting data. The personal identification information may include the customer's face recognition information, gender, hair color, height, face color, whether or not wearing a hat, color of clothes, etc., and each of the personal identification information is converted into a personal identification object in a form that is difficult for humans to identify, such as an image containing a number, QR code, etc. that defines the personal identification information. The above-mentioned personal identification information may be stored as a QR code image in a block chain so as not to violate the Personal Information Protection Act. Meanwhile, the personal identification information may be obtained not only by means of the surveillance camera 18, but also through WI-FI, Bluetooth, Lidar, 3D camera, etc. in the store where the self-checkout apparatus 1 is installed.

The processor 111 may determine the customer's age using the personal identification information. In particular, the processor 111 may analyze the customer's face image to estimate the age with high accuracy. As a result of analyzing in real time the video obtained by the surveillance camera 18, if it is determined that a customer, who is younger than the authorized age, has picked up an age-restricted product such as alcohol, cigarettes, etc. from a display shelf, the processor 111 may track the corresponding customer and give an alarm to a store employee such as a manager while the corresponding customer is recognizing the age-restricted product in the product recognition table 11. Moreover, if the customer who has picked up the age-restricted product is positioned in front of the product recognition table 11, the processor 111 determines whether the behavior of the customer who has picked up the age-restricted product is an abnormal behavior based on the identification result of the product recognition camera 16 for the age-restricted product and the video taken by the surveillance camera 18 for the behavior of the customer who has picked up the age-restricted product. Furthermore, the processor 111 stores the video taken by the surveillance camera 18 for the behavior of the customer who has picked up the age-restricted product from the product recognition table 11 in a video storage device. The video of the behavior of the customer who has picked up the age-restricted product is stored along with metadata describing the video, and the stored video can be used later as data to prove the customer's abnormal behavior.

In addition, the processor 111 may measure the customer's heart rate by means of the surveillance camera 18. The processor 111 may determine the customer's state, such as an emotional state, a nervous state, an excited state, etc. based on the personal identification information and the heart rate reading. The processor 111 may analyze the data collected by means of the surveillance camera and through WI-FI, Bluetooth, Lidar, or 3D camera, etc. to measure a change in the customer's heart rate, and may determine the customer's state based on a change in the customer's heart rate, a change in the customer's facial expression, a change in the customer's face color, the customer's movement, etc. The result of determining the customer's state may be used as basic data for the processor 111 to determine the customer's abnormal behavior. For example, if it is recognized that a customer's heart rate or face color changes rapidly in front of the product recognition table 11, the processor 111 may determine that the corresponding customer is likely to commit an abnormal behavior and store the video data of the corresponding customer's behavior.

The processor 111 may search for video data related to an identification code for a specific product or video data corresponding to metadata from the video data storage device according to the manager's instructions and, as a result of the search, reproduce the video data related to the identification code and the video data corresponding to metadata. Additionally, when searching for a video containing a specific event occurred, it is possible to search for the corresponding event from the metadata to determine when the event occurred and what metadata was stored, and reproduce the video recorded at that time.

Therefore, the manager can search for and reproduce the video stored in the video data storage device in order to check the loss of products, check the purchase history according to the customer's request, etc. For example, if customer A who has purchased product B wants to refund it, but does not keep the receipt, the manager may search for the barcode of product B from the video data storage device to check whether the customer has actually purchased the corresponding product at the corresponding store and when the corresponding product was sold to check the validity period of the refund, and may determine whether video of customer A was captured at the time of purchase. As another example, if it is determined that there is a discrepancy in the quantity of product A during an inventory check, the manager may check the purchase history of product A from the most recent inventory check date until the date of the inventory abnormality in the video data storage device, and if there is suspicion of loss, the manager may check the case where the identification code of the product was not recognized and the case where the product was re-scanned by the handy scanner, thereby determining whether the customer accidentally or intentionally failed to scan the identification code of product A.

Meanwhile, in the case where it is determined that a specific product is frequently lost or stolen, if the manager specifies the lost product and input the specified product into the self-checkout apparatus 1, then the controller 110 may search for all videos containing the customers' behaviors related to the specified product from the videos taken by the surveillance camera 18 and store the videos in the storage 120 or an external video data storage device. Thereafter, if the manager selects the videos, from which the customers' abnormal behaviors (such as thefts of specific products) were identified, from the stored videos and classifies the selected videos as training data, the controller 110 accumulates and stores the videos classified as training data. Once the training data has been accumulated, the controller 110 uses the training data to train the artificial neural network of the above-mentioned AI processor 113-1. By training the artificial neural network with the video of the customer's abnormal behavior to determine the customer's abnormal behavior of stealing the specific product, the controller 110 can enhance the algorithm to detect the customer's abnormal behavior related to the frequently lost product. Moreover, the manager may search for a video containing a specified product with metadata from event videos containing the existing customers' behaviors, which are stored in the storage 120 or an external video data storage device, and select videos, from which the customers' behaviors were identified, from the searched video and include the selected videos in the training data.

Next, a control method of a self-checkout apparatus according to the present disclosure will be described with reference to FIGS. 1 to 5.

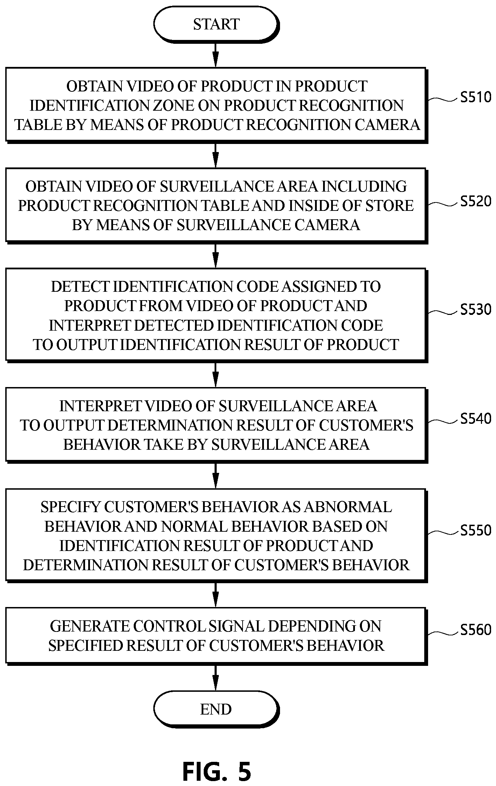

FIG. 5 is a flowchart illustrating a control method of a self-checkout apparatus according to the present disclosure.

Referring to FIG. 5, a self-checkout apparatus 1 obtains a video of a product in a product identification zone 11 by photographing the product identification zone 11 provided on a product recognition table 11 by means of a product recognition camera 16 (S510).

At the same time, the self-checkout apparatus 1 obtains a video of a surveillance area by photographing the surveillance area, which includes the product recognition table 11, a predetermined area around the product recognition table 11, an area where the post-identification product table 31 is located, and an area where a customer is standing, by means of the surveillance camera 18 (S520).

The self-checkout apparatus 1 detects an identification code assigned to the product from the video of the product obtained by the product recognition camera 16 and interprets the detected identification code to output an identification result of the product captured by the product recognition camera 16 (S530).

The self-checkout apparatus 1 interprets the video of the surveillance area obtained by the surveillance camera 18 to output a determination result of the customer's behavior (S540).

The self-checkout apparatus 1 specifies the customer's behavior captured by the surveillance camera 18 as either an abnormal behavior or a normal behavior based on the identification result of the product captured by the product recognition camera 16 and the determination result of the customer's behavior captured by the surveillance camera 18 (S550). The self-checkout apparatus 1 may analyze the video of the surveillance area obtained by the surveillance camera 18 by means of an artificial neural network to determine the behavior of the customer captured by the surveillance camera 18. Here, the artificial neural network may be trained by learning the video of the customer's behavior captured by the surveillance camera 18 at the time when the product is identified and the video of the customer's behavior captured by the surveillance camera 18 at the time when the product is not identified to determine the customer's behavior that does not correspond to the behavior of locating a product in the product identification zone to be identified.

Finally, the self-checkout apparatus 1 generates a control signal such as generating a warning sound or warning light depending on the specified result of the customer's behavior (S560).

At each of the aforementioned steps, the detailed functions performed by the self-checkout apparatus 1 have been described in detail with respect to the description of FIGS. 1 to 41, and thus a description thereof is omitted here in order to avoid a repetitive description.

In the foregoing description, the steps, processes or operations may be further divided into additional steps, processes or operations, or combined into fewer steps, processes or operations, according to the present disclosure. Moreover, some of the steps, processes or operations may be omitted if necessary, and the sequence of the steps or operations may be changed. Furthermore, each step or operation included in the control method of the self-checkout apparatus as described above may be implemented as a computer program and stored in a computer-readable recording medium, and each steps, process or operation may be executed by a computer device.

The term "unit" used herein (e.g., a controller, etc.) may mean, for example, a unit including one or a combination of two or more of hardware, software, or firmware. "Unit" may be used interchangeably with terms such as unit, logic, logical block, component, or circuit, for example. The "unit" may be a minimum unit of an integra part or a portion thereof. The "unit" may be a minimum unit performing one or more functions, and a portion thereof. The "unit" may be implemented mechanically or electronically. For example, the "unit" may include at least one of application-specific integrated circuit (ASIC) chips, field-programmable gate arrays (FPGAs), or programmable-logic devices that perform certain operations and are currently known or will be developed in the future.

At least a portion of a device (e.g., modules or functions thereof) or a method (e.g., operations) according to the present disclosure may be implemented using instructions stored in, for example, a computer-readable storage media in the form of a program module. When the instructions are executed by a processor, the one or more processors may perform a function corresponding to the instruction. The computer-readable storage medium may be, for example, a memory.

The computer-readable storage media/computer-readable recording media may include hard disks, floppy disks, magnetic media (e.g., magnetic tape), optical media (e.g., CD-ROM (compact disc read only memory), DVD (digital versatile disc), magnetic-optical media (e.g. floptical disk), hardware devices (e.g., read only memory (ROM), random access memory (RAM), or flash memory), etc. Further, the program instruction may include a high-level language code that may be executed by a computer using an interpreter or the like as well as a machine language code created by a compiler. The above-described hardware device may be configured to operate as one or more software modules to perform operations of the present disclosure, and vice versa.

A module or a program module according to the present disclosure may include at least one or more of the above-described elements, some of them may be omitted therefrom, or the module or program module may further include additional other elements. Operations performed by a module, a program module, or other components according to the present disclosure may be executed in a sequential, parallel, repetitive, or heuristic manner. Further, some operations may be executed in a different order, omitted, or other operations may be added thereto.

As used herein, the singular forms "a", "an", and "one" are intended to include the plural forms as well, unless the context clearly indicates otherwise. It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

The arrangement of components to achieve the same function is effectively "related" so that the desired function is achieved. Thus, any two components combined to achieve a particular function may be considered to be "related" to each other such that the desired function is achieved, regardless of a structure or am intervening component. Likewise, two components thus related may be considered to be "operably connected" or "operably coupled" to each other to achieve the desired function.

Further, one of ordinary skill in the art will recognize that a boundary between the functionalities of the aforementioned operations is merely exemplary. A plurality of operations may be combined into a single operation. A single operation may be divided into additional operations. Operations may be executed in an at least partially overlapping manner in time. Further, alternative examples may include a plurality of instances of a specific operation. The order of operations may vary in various other examples. However, other modifications, variations and alternatives may be present. Accordingly, the detailed description and drawings should be regarded as illustrative and not restrictive.

The phrase "may be X" indicates that the condition X may be satisfied. This phrase also indicates that condition X may not be satisfied. For example, a reference to a system that contains a specific component should also include a scenario where the system does not contain the specific component. For example, a reference to a method containing a specific operation should also include a scenario where the corresponding method does not contain the specific operation. However, in another example, a reference to a system configured to perform a specific operation should also include a scenario where the system is configured not to perform the specific operation.

The terms "comprising", "having", "composed of", "consisting of' and "consisting essentially of' are used interchangeably. For example, any method may include at least an operation included in the drawing and/or specification, or may include only an operation included in the drawings and/or specification.

Those of ordinary skill in the art may appreciate that the boundaries between logical blocks are merely exemplary. It will be appreciated that alternative examples may combine logical blocks or circuit elements with each other or may functionally divide various logical blocks or circuit elements. Therefore, a architecture shown herein is only exemplary. In fact, it should be understood that various architectures may be implemented that achieve the same function.

Further, for example, in one example, the illustrated examples may be implemented on a single integrated circuit or as a circuit located within the same device. Alternatively, the examples may be implemented as any number of individual integrated circuits or individual devices interconnected with each other in a suitable manner. Other changes, modifications, variations and alternatives may be present. Accordingly, the specification and drawings are to be regarded as illustrative and not restrictive.

Further, for example, the examples or some of thereof may be implemented using physical circuits such as any suitable type of hardware description language, or software or code representations of logical representations convertible to physical circuits.

Further, the present disclosure is not limited to a physical device or unit implemented as nonprogrammable hardware, but may be applied to a programmable device or unit capable of performing a desired device function by operating according to an appropriate program code, such as a main frame generally referred to as a 'computer system', a mini computer, server, workstation, personal computer, notepad, PDA, electronic game player, automobiles and other embedded systems, mobile phones and various other wireless devices, etc.

A system, device or device mentioned herein may include at least one hardware component.

Connection as described herein may be any type of connection suitable for transmitting a signal from or to each node, unit or device via an intermediate device, for example. Thus, unless implied or otherwise stated, the connection may be direct connection or indirect connection, for example. Connection may include single connection, multiple connection, one-way connection or two-way connection. However, different examples may have different implementations of the connection. For example, separate one-way connection may be used rather than two-way connection, and vice versa. Further, a plurality of connections may be replaced with a single connection in which a plurality of signals are transmitted sequentially or in a time multiplexing scheme. Likewise, a single connection in which a plurality of signals are transmitted may be divided into various connections in which subsets of the signals are transmitted. Thus, there are many options for transmitting the signal.

In the claims, any reference signs placed between parentheses shall not be construed as limiting the claim. The word 'comprising' does not exclude the presence of elements or operations listed in a claim.

In the above descriptions, the present disclosure has been described with reference to the accompanying drawings. The terms or words used herein and claims should not be construed as being limited to a conventional or dictionary meaning, and should be interpreted as a meaning and concept consistent with the technical idea of the present disclosure. The scope of the present disclosure is not limited to the examples disclosed herein. The present disclosure may be modified, altered, or improved in various forms within the scope of the spirit and claims of the present disclosure.

### [Description of Reference Numerals]

| | | | |
|---|---|---|---|
| 1: | self-checkout apparatus | | |
| 10: | first housing | 11: | product recognition table |
| 20: | second housing | 21: | pre-identification product table |
| 30: | third housing | 31: | post-identification product table |
| 11-1: product identification zone | | | |
| 12: | display device | 13: | input device |
| 14: | card reader | 15: | receipt printer |
| 16: | product recognition camera | 17: | handy scanner |
| 18: | surveillance camera | 19: | guide device |
| 21-1: | first weighing sensor | 31-1: | second weighing sensor |
| 50: | first product | 52: | second product |
| 51: | identification code | 60: | customer's hand |
| 100: | control device | 110: | controller |
| 111: | processor | 112: | product identifier |
| 113: | customer behavior determinator | 113-1: | AI processor |
| 120: | storage | 130: | graphic processor |
| 140: | input/output interface | 150: | communication interface |
| 190: | system bus | | |

## Claims

1. A self-checkout apparatus comprising:
a product recognition table which is provided with a product identification zone and on which a product to be identified is located;
a first camera which is arranged so that a photographing direction is toward the product identification zone and which obtains a video of the product in the product identification zone by photographing the product identification zone;
a second camera which obtains a video of a surveillance area by photographing the surveillance area including the product recognition table and the inside of a store;
a product identifier which detects an identification code assigned to the product from the video of the product obtained by the first camera and interprets the detected identification code to output an identification result of the product captured by the first camera;
a customer behavior determinator which interprets the video of the surveillance area obtained by the second camera to output a determination result of a customer's behavior captured by the second camera; and
a processor which specifies the customer's behavior as an abnormal behavior and a normal behavior based on the identification result of the product captured by the first camera and the determination result of the customer's behavior captured by the second camera, and generates a control signal depending on the specified result.

2. The self-checkout apparatus of claim 1, wherein the customer behavior determinator comprises an artificial neural network which analyzes the video of the surveillance area obtained by the second camera to determine the customer's behavior captured by the second camera, and
wherein the artificial neural network is trained by learning a video of the customer's behavior captured by the second camera as the product is identified by the product identifier and a video of the customer's behavior captured by the second camera as the product is not identified by the product identifier to determine the customer's behavior that does not correspond to the behavior of locating a product in the product identification zone to be identified.

3. The self-checkout apparatus of claim 2, wherein the processor analyzes the video of the surveillance area obtained by the second camera to specify the customer's behavior captured by the second camera as an abnormal behavior and a normal behavior based on at least one of a change in facial expression, a change in face color, and a heart rate reading of the customer captured by the second camera, and generates a control signal depending on the specified result.

4. The self-checkout apparatus of claim 2, wherein, as a specific product is input, the processor stores a video of the customer's behavior related to the specific product from the video of the customer's behavior captured by the second camera, and trains the artificial neural network with a video of the customer's behavior related to the specific product, which is specified as an abnormal behavior, from the stored video of the customer's behavior related to the specific product, to update the artificial neural network's ability to determine the customer's abnormal behavior for the specific product.

5. The self-checkout apparatus of claim 2, wherein, as it is determined that the customer has picked up an age-restricted product based on the analysis of the video captured by the second camera, the processor analyzes the face image of the customer who has picked up the age-restricted product to calculate an age of the customer; and
as the age of the customer who has picked up the age-restricted product is determined to be below an authorized age for the age-restricted product and the customer who has picked up the age-restricted product is recognized in front of the product recognition table, the processor specifies whether the behavior of the customer who has picked up the age-restricted product is an abnormal behavior based on the identification result of the product captured by the first camera for the age-restricted product and the determination result of the customer's behavior captured by the second camera.

6. The self-checkout apparatus of claim 2, further comprising a pre-identification product table and a post-identification product table disposed in a predetermined area around the product recognition table,
wherein the abnormal behavior of the customer include:
a situation where the customer behavior determinator recognizes two or more products in the customer's hand;
a situation where the customer behavior determinator recognizes one product in the customer's hand, but the recognized product is not identified; and
a situation where the product picked up by the customer from the pre-identification product table is not identified and moved to the post-identification product table.

7. The self-checkout apparatus of claim 6, wherein the pre-identification product table includes a first weighing sensor that measures the weight of products placed on the pre-identification product table and the post-identification product table includes a second weighing sensor that measures the weight of products placed on the post-identification product table, and
wherein, as the first or the second weighing sensor detects a weight change in at least one of the pre-identification product table and the post-identification product table and the product is not identified by the product identifier at the time of detecting the weight change or if the weighing sensor detects a smaller weight increase in the post-identification product table than the weight decrease in the pre-identification product table and the product is identified by the product identifier at the time of detecting the weight change, the processor outputs a specified result to decide that the customer has committed an abnormal behavior.

8. The self-checkout apparatus of claim 1, wherein the processor generates metadata for an event related to the customer's behavior based on the identification result of the product captured by the first camera and the determination result of the customer's behavior captured by the second camera,
matches the metadata with video data of the first camera and the second camera from which the metadata is generated to store the resulting data in a video data storage device, and
as a keyword is input, searches for the keyword from the metadata to extract and reproduce video data corresponding to the keyword from the video data storage device.

9. The self-checkout apparatus of claim 1, wherein, as the product is recognized from the videos captured by the first camera and the second camera, the processor: stores a video of the customer's behavior related to the recognized product in the video data storage device, records information specifying the recognized product in the metadata, and then matches the metadata with the video of the customer's behavior related to the recognized product to store the resulting data; and
as a keyword specifying the recognized product is input, searches for the keyword from the metadata to extract the video of the customer's behavior related to the recognized product from the video data storage device.

10. The self-checkout apparatus of claim 8, wherein the processor generates a personal identification object corresponding to personal identification information of the customer captured by the second camera, and matches the personal identification object with the video data obtained by the first camera related to the customer captured by the second camera and the video data obtained by the second camera to store the resulting data in the video data storage device.

11. A control method of a self-checkout apparatus, the method comprising the steps of:
obtaining, by a first camera, a video of a product in a product identification zone by photographing the product identification zone provided on a product recognition table;
obtaining, by a second camera, a video of a surveillance area by photographing the surveillance area including the product recognition table and the inside of a store;
detecting an identification code assigned to the product from the video of the product obtained by the first camera and interpreting the detected identification code to output an identification result of the product captured by the first camera;
interpreting the video of the surveillance area obtained by the second camera to output a determination result of the customer's behavior captured by the second camera;
specifying the customer's behavior as either an abnormal behavior or a normal behavior based on the identification result of the product captured by the first camera and the determination result of the customer's behavior captured by the second camera; and
generating a control signal depending on the specified result.

12. The control method of a self-checkout apparatus of claim 11, wherein the step of specifying the customer's behavior as either an abnormal behavior or a normal behavior comprises the step of analyzing the video of the surveillance area obtained by the second camera by means of an artificial neural network to determine the customer's behavior captured by the second camera, and
wherein the artificial neural network is trained by learning a video of the customer's behavior captured by the second camera at the time as the product is identified and a video of the customer's behavior captured by the second camera at the time as the product is not identified to determine the customer's behavior that does not correspond to the behavior of locating a product in the product identification zone to be identified.

13. The control method of a self-checkout apparatus of claim 12, further comprising the steps of:
as a specific product is input, storing a video of the customer's behavior related to the specific product from the video of the customer's behavior captured by the second camera; and
training the artificial neural network with a video of the customer's behavior related to the specific product, which is specified as an abnormal behavior from the stored video, to update the artificial neural network's ability to determine the customer's abnormal behavior for the specific product.

14. The control method of a self-checkout apparatus of claim 12, further comprising the steps of:
as it is determined that the customer has picked up an age-restricted product based on the analysis of the video captured by the second camera, analyzing the face image of the customer who has picked up the age-restricted product to calculate the customer's age; and
as the age of the customer who has picked up the age-restricted product is determined to be below an authorized age for the age-restricted product and the customer who has picked up the age-restricted product is recognized in front of the product recognition table, specifying whether the behavior of the customer who has picked up the age-restricted product is an abnormal behavior based on the identification result of the product captured by the first camera for the age-restricted product and the determination result of the customer's behavior captured by the second camera.

15. The control method of a self-checkout apparatus of claim 11, further comprising the steps of:
generating metadata for an event related to the customer's behavior based on the identification result of the product captured by the first camera and the determination result of the customer's behavior captured by the second camera;
matching the metadata with video data of the first camera and the second camera from which the metadata is generated to store the resulting data in a video data storage device; and
as a keyword is input, searching for the keyword from the metadata to extract and reproduce video data corresponding to the keyword from the video data storage device.
